# EUROPÄISCHE PATENTSCHRIFT

(11) **EP 0 619 446 B1**
(45) Veröffentlichungstag und Bekanntmachung des Hinweises auf die Patenterteilung: **29.05.1996**
(21) Anmeldenummer: 94103964.6
(22) Anmeldetag: 15.03.1994
(51) Int. Cl.: F16H 59/10, B60R 25/02

(54) **Abziehsperre für den Zündschlüssel bei Zündschaltern von Kraftfahrzeugen**
Ignition key removal blocking device for the ignition switch of motor vehicles
Dispositif de verrouillage de l'extraction de la clé de contact pour le commutateur d'allumage pour véhicules automobiles

(30) Priorität: 06.04.1993 DE 4311382; 24.09.1993 DE 4332478
(43) Veröffentlichungstag der Anmeldung: 12.10.1994
(73) Patentinhaber: Merit-Elektrik GmbH, D-51643 Gummersbach (DE)
(72) Erfinder:
(74) Vertreter: Schwarz, Klaus-Jürgen, Dipl.-Ing.

(56) Entgegenhaltungen:
- DE-A- 4 206 251
- DE-U- 8 802 327
- FR-A- 2 044 039
- FR-A- 2 498 540
- GB-A- 2 211 545
- PATENT ABSTRACTS OF JAPAN vol. 15, no. 49 (M-1078) 6. Februar 1991 & JP-A-02 283 962 (MAZDA MOTOR CORP.)

## Beschreibung

Die Erfindung betrifft eine Abziehsperre für den Zündschlüssel bei Zündschaltern von Kraftfahrzeugen mit Automatik - oder Schaltgetriebe in Abhängigkeit davon, daß sich das Getriebe in einer die Antriebsräder des Fahrzeuges sperrenden "Park"- oder "Sperr"-Stellung befindet, wobei eine mit einem Schaltkontakt am Getriebe verbundene elektromagnetische oder elektromechanische Sperrvorrichtung mit einer Sperrstufe zusammenwirkt und die Drehung des Zündschalters in die Abziehstellung des Zündschlüssels in Abhängigkeit von der Stellung des Getriebes sperrt.

Um ein unbeabsichtigtes Wegrollen von Fahrzeugen beim Parken zu vermeiden, ist es aus Sicherheitsgründen zweckmäßig sicherzustellen, daß das Getriebe des Fahrzeuges vor dem Abziehen des Zündschlüssels in die "Park"-Stellung oder in eine andere Stellung gebracht worden ist. Dies gilt für Fahrzeuge mit einem mechanischen Schaltgetriebe generell ebenso wie für Fahrzeuge mit automatischem Getriebe. Mit anderen Worten bedeutet dies, daß der Zündschlüssel, der in der Regel auch zum Abschließen der Türen erforderlich ist, erst abgezogen werden kann, wenn das Getriebe des Fahrzeuges durch Einlegen einer entsprechenden Schaltstellung die Antriebsräder blockiert hat.

Neben rein mechanischen Abziehsperren für den Zündschlüssel am Zündschloß, die in Abhängigkeit von der Schaltstellung des Wählhebels am Getriebe betätigt werden, sind auch Abziehsperren bekannt (DE-A-42 06 251, DE-U-88 02 327 und FR-A-24 98 540), bei denen eine Sperrklinke oder ein Sperrstift mit einer Sperrstufe am Schaltschloß zusammenwirkt und nicht durch einen Seilzug mechanisch, sondern über ein elektrisches Kabel zwischen einem Schalter am Getriebe und einem Elektromagneten am Schaltschloß betätigt wird. Aus der DE-A 42 06 251 sind die im Oberbegriff von Anspruch 1 aufgeführten Merkmale bekannt. Aus PATENT ABSTRACTS OF JAPAN vol. 15. no. 49 (M-1078) 6. Februar 1994 & JP-A-02 283 962 (MAZDA MOTOR CORP.) ist weiterhin eine elektromagnetische Abziehsperre für den Zündschlüssel bei Kraftfahrzeugen bekannt, bei der die Sperreinrichtung für den Zündschlüssel mit einer Schalthebelverriegelung zusammenwirkt.

Bei allen diesen bekannten Abziehsperren greift die durch einen Elektromagneten betätigte Sperrklinke oder der Sperrstift in der Verriegelungsstellung in eine Sperrstufe am Zündschloß ein. Hierbei ist außer der Verkabelung des Elektromagneten am Zündschloß mit dem Schalter oder Sensor am Schalthebel eine zusätzliche Verkabelung mit dem Zünd- oder Zündanlasserschalter erforderlich.

Der Erfindung liegt die Aufgabe zugrunde, eine Abziehsperre nach dem Oberbegriff des Anspruches 1 wesentlich einfacher so auszubilden, daß sie sicherer funktioniert und auch wirtschaftlicher hergestellt werden kann.

Diese Aufgabe wird gemäß der Erfindung dadurch gelöst, daß die Sperrstufe am Rotor des Zündschalters ausgebildet ist, und daß die Sperrvorrichtung am Zündschalter aus einem Elektromagneten mit einem federbelasteten Anker oder Tauchkern besteht, der in der Stellung "Zündschlüssel gesperrt" mit einem Sperrfortsatz an seinem freien Ende in die Bewegungsbahn des Rotors mit der Sperrstufe von außen eingreift.

Besonders vorteilhafte Weiterbildungen der Erfindung sind in den Ansprüchen 2 bis 7 gekennzeichnet.

Sobald zum Beispiel der Wählhebel eines Automatik-Getriebes in der "Park"-Stellung ist, wird beispielsweise ein elektrisches Kontaktpaar geöffnet bzw. ein Stromkreis unterbrochen und durch die damit verbundene elektromagnetische oder elektromechanische Sperreinrichtung ein Drehen des Zündschlüssels bis in die Abziehstellung solange verhindert, wie das Getriebe nicht durch die Funktion "Park" oder eine andere entsprechende Position gesperrt ist.

An dem Zünd- bzw. Zündanlasserschalter wird ein Elektromagnet so angebracht, daß sein beispielsweise mit einem Sperrfortsatz ausgerüsteter Anker im angezogenen Zustand den Sperrfortsatz in sperrenden Eingriff mit der Sperrstufe an dem Rotor bzw. Mitnehmer des Schalters bringt, und zwar so, daß die Abziehposition für den Zündschlüssel nicht erreicht werden kann. Diese mechanische Sperre oder Verriegelung kann auch durch den Tauchkern einer Magnetspule oder durch andere elektromechanisch oder elektromagnetisch bewegte Einrichtungen erfolgen.

Solange der Wählhebel des Getriebes nicht in einer das Getriebe und damit die Antriebsräder sperrenden Position ist, ist beispielsweise ein masseführendes Kontaktpaar geschlossen und legt so Masse an den Elektromagneten.

Wird beim Ausschalten des Motors mittels des Zündschalters der Zündschlüssel in Richtung "Aus" gedreht, so wird zumindest während der Drehung in diese Position ein Kontakt geschlossen und legt den Elektromagneten an Spannung.

Ist das Getriebe nicht in einer sperrenden Position, so wird der Elektromagnet erregt, der Klappanker angezogen, und der Sperrfortsatz greift in eine als Sperrstufe dienende Aussparung, Abstufung oder dergleichen des Rotors oder Mitnehmers am Zündschalter ein, so daß der Zündschalter nicht in die "Aus"-Stellung gebracht und der Zündschlüssel folglich nicht abgezogen werden kann. Sobald das Getriebe gesperrt wird, fällt die Masse und damit auch die Erregung des Elektromagneten oder der Magnetspule ab und der Sperrfortsatz des Ankers gibt den Rotor oder Mitnehmer mit der Sperrstufe frei. Der Zündschlüssel kann weitergedreht und vom Zündschalter bzw. Zündschloß abgezogen werden.

Die Erfindung hat den Vorteil, daß der Zündschlüssel, gesteuert durch die Funktionspositionen des Getriebes im zusammenwirken mit dem Zündanlasserschalter, nicht in die Abziehstellung gebracht werden kann, wenn das Getriebe sich nicht in einer Stellung befindet, in der die Antriebsräder gesperrt sind.

Hierbei wird durch ein elektrisches Kontaktpaar direkt oder indirekt mittels einer elektrischen oder elektronischen Hilfsschaltung gemeldet, ob das Getriebe in einer sperrenden Stellung ist oder nicht.

Außerdem kann eine Kontaktanordnung im oder am Zündanlasserschalter während der Drehbewegung des Zündschlüssels von der Schaltstellung "Fahrt" oder "zündung" zur Schaltstellung "Aus" bzw. "zündschlüssel abziehbar" ein Signal an die elektromechanische Abziehsperre geben.

Wenn vom Getriebe das Signal "Antriebsräder nicht gesperrt" und von der Übertragungswelle oder dem Zündanlasserschalter das Signal "Schlüsseldrehung in Richtung Schaltstellung 'Zündschlüssel abziehbar' " gleichzeitig erfolgen, so wird spätestens dann die elektromechanische Abziehsperre aktiviert und die Fortsetzung der Drehbewegung des Zündschlüssels solange verhindert, wie das Getriebe die Antriebsräder nicht sperrt.

Bevorzugte Ausführungsbeispiele der Erfindung sind in der Zeichnung schematisch dargestellt. Es zeigen
- Fig. 1: eine teilweise aufgebrochene Seitenansicht einer Abziehsperre für den Zündschlüssel bei Zündschaltern von Kraftfahrzeugen mit einer elektromagnetischen Sperrvorrichtung in der Position "Zündschlüssel gesperrt",
- Fig. 2: die Abziehsperre von Fig. 1 in der Position "Zündschlüssel frei",
- Fig. 3: eine teilweise aufgebrochen dargestellte Draufsicht auf den Zündschalter mit elektromagnetischer Sperrvorrichtung in Richtung des Pfeiles III von Fig. 1,
- Fig. 4: ein Schaltschema für derartige elektromagnetische Sperrvorrichtungen in Arbeitsstromschaltung und
- Fig. 5: ein Schaltschema für derartige elektromagnetische Sperrvorrichtungen in Ruhestromschaltung.

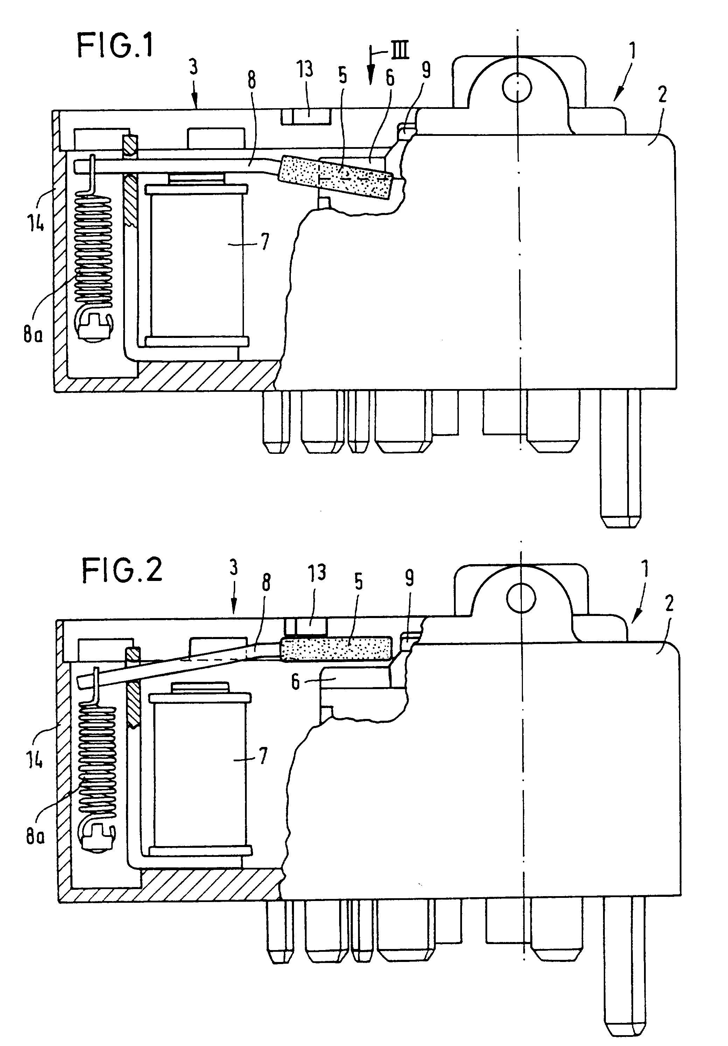

Die in Fig. 1 bis 3 gezeigte Abziehsperre 1 für den Zündschlüssel 20 bei Zündschaltern von Kraftfahrzeugen mit Automatik- oder Schaltgetriebe arbeitet in Abhängigkeit davon, daß sich das Schaltgetriebe in einer die Antriebsräder des Fahrzeuges sperrenden "Park"- oder "Sperr"-Stellung befindet.

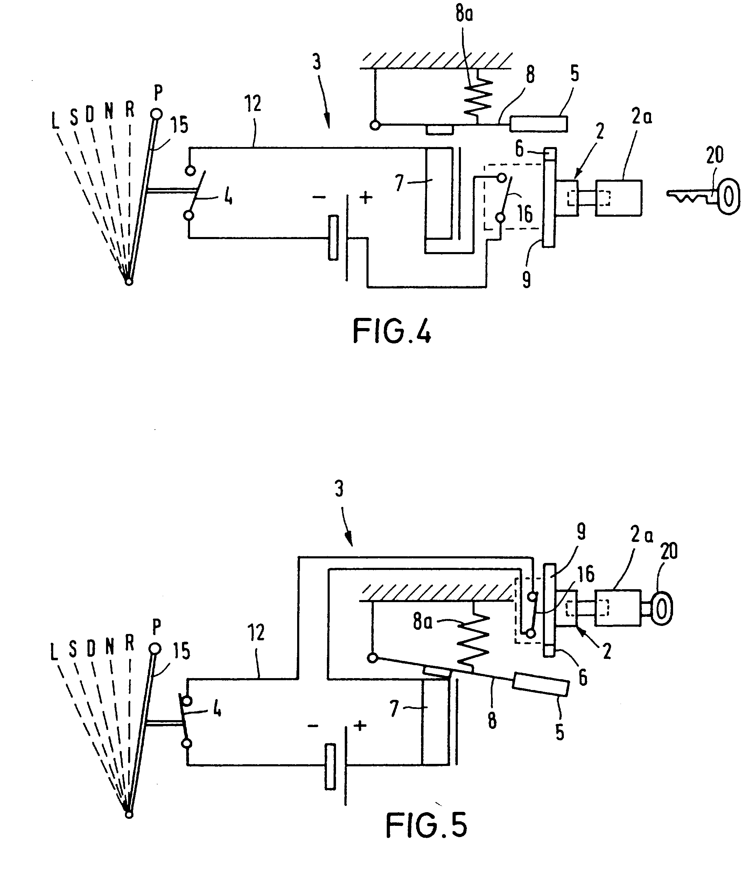

Hierbei ist dem Zündschalter 2 oder einer die Schlüsseldrehung auf den Zündschalter übertragenden Welle 2a eine elektromagnetische Sperrvorrichtung 3 zugeordnet, die mit einem Schaltkontakt 4 (Fig. 4 und 5) am Getriebe zusammenwirkt. Die Sperrvorrichtung 3 hat einen Sperrfortsatz 5, der mit einer Sperrstufe 6 am Zündschalter 2 oder an der Welle 2a zusammenwirkt und die Drehung des Zündschalters 2 in die Abziehstellung des Zündschlüssels 20 in Abhängigkeit von der Stellung des Getriebes sperrt.

Die Sperrvorrichtung 3 besteht in der gezeigten bevorzugten Ausführungsform aus einem Elektromagneten 7 mit einem durch eine Zugfeder 8a belasteten Klappanker 8, der an seinem freien Ende den Sperrfortsatz 5 trägt und mit diesem in der Stellung "Zündschlüssel gesperrt" von Fig. 1 in die Bewegungsbahn eines Rotors 9 an dem Zündschalter 2 oder an der Welle 2a von außen eingreift, der die Sperrstufe 6 für den Sperrfortsatz 5 trägt.

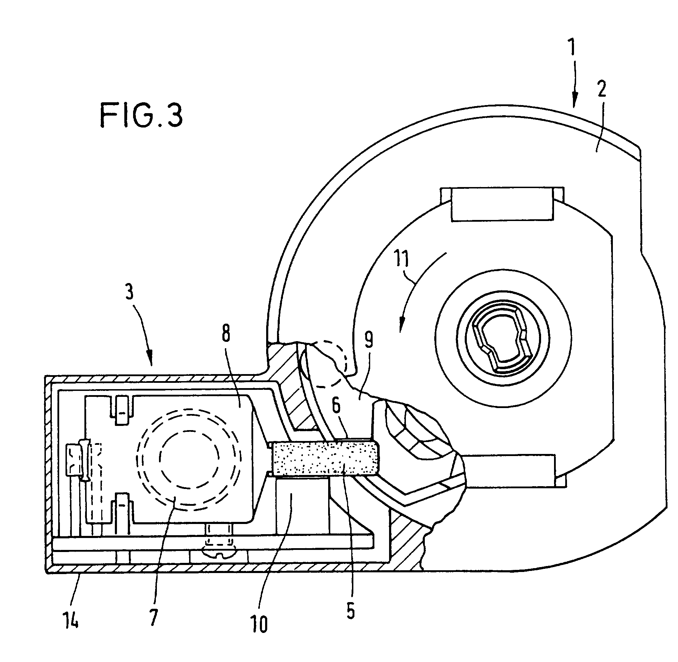

Die Sperrvorrichtung 3 ist vorzugsweise als Klappankerrelais ausgebildet, wobei der Sperrfortsatz 5 des Klappankers 8 durch einen seitlichen Anschlag 10 in AUS-Schaltrichtung 11 des Zündschalters 2 (Fig. 3) abgestützt ist, um eine gewaltsame Drehung des Zündschlüssels 20 in die Abziehstellung bzw. in die Position "Zündschlüssel frei" wirksam zu verhindern.

Fig. 4 und 5 zeigen beispielhaft in zwei verschiedenen Schaltungen das Zusammenwirken der Schaltkontakte 4 am Getriebe oder dessen Schalt- oder Wählhebel 15 einerseits und der Kontakte 16 der Sperrvorrichtung 3 am Zündschalter 2 bzw. an der Übertragungswelle 2a für dessen Betätigung durch den Zündschlüssel 20. Hierbei befindet sich der Elektromagnet 7 für die Betätigung des Klappankers 8 in einem Stromkreis 12, in dem beim Schließen des Schaltkontaktes 4 am Getriebe ein Strom fließt. Bei nicht erregtem Elektromagneten 7 berührt der Klappanker 8 in Fig. 2 einen oberen Anschlag 13 am Gehäuse 14 des Zündschalters 2. Bei erregtem Elektromagneten 7 wird der Klappanker 8 angezogen und greift mit dem Sperrfortsatz 5 in die Sperrstufe 6 am Rotor 9 oder Mitnehmer des Zündschalters 2 sperrend ein, wie in Fig. 1 gezeigt ist. Der Kontakt 16 am Zündschalter 2 wird zum Beispiel beim Einstecken des Zündschlüssels 20 in das Zündschloß betätigt, mindestens jedoch beim Zurückdrehen von der Position "Zündung" oder "Fahrt" in die Ausschaltstellung.

In Fig. 4 ist die elektromagnetische Sperrvorrichtung 3 derart geschaltet, daß der Erregerstromkreis des Elektromagneten 7 in der die Antriebsräder des Fahrzeuges sperrenden "Park"- oder "Sperr"-Stellung P unterbrochen und in den anderen Betriebsstellungen des Getriebes geschlossen ist.

Der Kontakt 16 im Zündschalter 2 wird in diesem Beispiel durch das Einstecken des Zündschlüssels 20 geschlossen und bleibt solange in dieser Schließstellung, wie der Zündschlüssel nicht abgezogen ist. Der Kontakt 16 schließt den Stromkreis des Bordnetzes zu der einen Seite der Spule des Elektromagneten 7, während die anderere Seite der Magnetspule über den Schaltkontakt 4 am Minuspol des Bordnetzes liegt. Der Schaltkontakt 4 ist solange geschlossen, wie der Wählhebel des Getriebes nicht in der die Antriebsräder sperrenden Parkstellung "P" ist. Die Magnetspule des Elektromagneten 7 ist somit erregt, wenn der Wählhebel des Getriebes nicht in der Position "P" steht und der Zündschlüssel 20 eingesteckt ist. Dabei befindet sich der Klappanker 8 der elektromagnetischen Sperrvorrichtung 3 oder der Tauchkern eines geeigneten Tauchkernrelais in einer die Drehbewegung des Rotors 9 des Zündschalters 2 oder der die Schlüsseldrehung übertragenden Welle 2a blockierenden Position.

Befindet sich dagegen der Wählhebel des Getriebes in der Position "P", so fällt die Spannung an der Spule des Elektromagneten 7 ab und der Klappanker 8 oder Tauchkern gibt den Rotor 9 des Zündschalters 2 oder der Welle 2a frei. Dies geschieht auch bei unzureichender Spannung des Bordnetzes oder bei einem Systemfehler im Bordnetz, was den Vorteil hat, daß auch in einem solchen Falle der Zündschlüssel 20 abziehbar ist, ohne daß ein besonderer Aufwand für eine Notfreigabe erforderlich wäre.

In Fig. 5 ist die elektromagnetische Sperrvorrichtung 3 mit eingestecktem Zündschlüssel 20 gezeigt. Sie ist so geschaltet, daß der Erregerstromkreis des Elektromagneten 7 in der die Antriebsräder des Fahrzeuges sperrenden "Park"- oder "Sperr"-Stellung P geschlossen und in den anderen Betriebsstellungen des Getriebes unterbrochen ist. Die Sperrung der Drehbewegung des Rotors 9 kann also sowohl durch einen aktivierten als auch durch einen ruhenden Elektromagneten erfolgen, auch ist es gleichgültig, ob Plus vom Zündschalter und Minus vom Getriebe kommt oder umgekehrt.

Die Sperrvorrichtung 3 kann auch nachträglich an einem für die Aufnahme entsprechend vorbereiteten Zündschalter 2 oder an der die Schlüsseldrehung übertragenden Welle 2a angebracht werden, wobei zweckmäßig ein Zündschalter verwendet wird, der sowohl mit als auch ohne Abziehsperre gleichermaßen funktionsfähig ist.

Statt als Klappankerrelais kann die Sperrvorrichtung 3 auch als Tauchkernrelais ausgebildet sein. Wesentlich ist hierbei, wie auch in allen anderen Fällen, daß die Sperrvorrichtung 3 nur dann sperrt, wenn der Zündschlüssel 20 aus der Stellung "Fahrt" in die Stellung "Schlüssel abziehbar" bewegt wird und gleichzeitig das Getriebe die Antriebsräder nicht sperrt.

### Liste der Bezugszeichen

- 1: Abziehsperre
- 2: Zündschalter
- 2a: Welle
- 3: Sperrvorrichtung
- 4: Schaltkontakt
- 5: Sperrfortsatz
- 6: Sperrstufe
- 7: Elektromagnet
- 8: Klappanker
- 8a: Zugfeder
- 9: Rotor
- 10: Anschlag
- 11: AUS-Schaltrichtung
- 12: Stromkreis
- 13: Anschlag
- 14: Gehäuse
- 15: Schalt- oder Wählhebel
- 16: Kontakte
- 20: Zündschlüssel

## Patentansprüche

1. Abziehsperre für den Zündschlüssel bei Zündschaltern von Kraftfahrzeugen mit Automatik- oder Schaltgetriebe in Abhängigkeit davon, daß sich das Getriebe in einer die Antriebsräder des Fahrzeuges sperrenden "Park"-oder "Sperr"-Stellung befindet, wobei eine mit einem Schaltkontakt am Getriebe verbundene elektromagnetische oder elektromechanische Sperrvorrichtung mit einer Sperrstufe (6) zusammenwirkt und die Drehung des Zündschalters (2) in die Abziehstellung des Zündschlüssels in Abhängigkeit von der Stellung des Getriebes sperrt, **dadurch gekennzeichnet**, daß die Sperrstufe (6) am Rotor (9) des Zündschalters (2) ausgebildet ist, und daß die Sperrvorrichtung (3) am Zündschalter (2) aus einem Elektromagneten (7) mit einem federbelasteten Anker (8) oder Tauchkern besteht, der in der Stellung "Zündschlüssel gesperrt" mit einem Sperrfortsatz (5) an seinem freien Ende in die Bewegungsbahn des Rotors (9) mit der Sperrstufe (6) von außen eingreift.

2. Abziehsperre nach Anspruch 1, **dadurch gekennzeichnet**, daß der die Sperrvorrichtung (3) aufnehmende Zündschalter (2) so geschaltet ist, daß die Sperrvorrichtung ohne weiteres nachträglich an-oder einbaubar ist, wobei der Zündschalter (2) als solcher mit oder ohne Abziehsperre funktionsfähig ist.

3. Abziehsperre nach Anspruch 1 oder 2, **dadurch gekennzeichnet**, daß die Sperrvorrichtung (3) als Klappanker- oder Tauchkernrelais ausgebildet ist.

4. Abziehsperre nach einem der Ansprüche 1 bis 3, **dadurch gekennzeichnet**, daß der Sperrfortsatz (5) durch einen seitlichen Anschlag (10) in AUS-Schaltrichtung des Zündschalters (2) abgestützt ist.

5. Abziehsperre nach einem der Ansprüche 1 bis 4, **dadurch gekennzeichnet**, daß die Sperrvorrichtung (3) derart geschaltet ist, daß der Erregerstromkreis des Elektromagneten (7) in der die Antriebsräder des Fahrzeuges sperrenden "Park"- oder "Sperr"-Stellung unterbrochen und in den Betriebsstellungen des Getriebes geschlossen ist.

6. Abziehsperre nach einem der Ansprüche 1 bis 4, **dadurch gekennzeichnet**, daß die Sperrvorrichtung (3) derart geschaltet ist, daß der Erregerstromkreis des Elektromagneten (7) in der die Antriebsräder des Fahrzeuges sperrenden "Park"- oder "Sperr"-Stellung geschlossen und in den Betriebsstellungen des Getriebes unterbrochen ist.

7. Abziehsperre nach einem der Ansprüche 1 bis 5 oder 6, **dadurch gekennzeichnet**, daß die Sperrvorrichtung (3) mindestens dann sperrt, wenn der Zündschlüssel aus der Stellung "Fahrt" in die Stellung "Schlüssel abziehbar" bewegt wird und gleichzeitig das Getriebe die Antriebsräder nicht sperrt.

## Claims

1. Withdrawal lockout for the ignition key in ignition switches of motor vehicles with automatic or shift transmission in dependence upon the transmission being in a "park" or "locking" position which locks the driving wheels of the vehicle, an electromagnetic or electromechanical locking device connected to a switching contact at the transmission cooperating with a locking step (6) and preventing rotation of the ignition switch (2) into the withdrawal position of the ignition key in dependence upon the position of the transmission, **characterized in that** the locking step (6) is formed on the rotor (9) of the ignition switch (2), and that the locking device (3) at the ignition switch (2) comprises an electromagnet (7) having a spring-loaded armature (8) or plunger core, which in the "ignition key locked" position engages with a locking extension (5) at its free end from the outside into the path of motion of the rotor (9) having the locking step (6).

2. Withdrawal lockout according to claim 1, characterized in that the ignition switch (2) receiving the locking device (3) is wired up in such a way that the locking device may easily be subsequently added on or installed, the ignition switch (2) as such being capable of functioning with or without a withdrawal lockout.

3. Withdrawal lockout according to claim 1 or 2, characterized in that the locking device (3) takes the form of a clapper-type relay or plunger core relay.

4. Withdrawal lockout according to one of claims 1 to 3, characterized in that the locking extension (5) is supported by a lateral stop (10) in the OFF switching direction of the ignition switch (2).

5. Withdrawal lockout according to one of claims 1 to 4, characterized in that the locking device (3) is wired up in such a way that the exciter circuit of the electromagnet (7) is interrupted in the "park" or "locking" position, which locks the driving wheels of the vehicle, and is closed in the operating positions of the transmission.

6. Withdrawal lockout according to one of claims 1 to 4, characterized in that the locking device (3) is wired up in such a way that the exciter circuit of the electromagnet (7) is closed in the "park" or "locking" position, which locks the driving wheels of the vehicle, and is interrupted in the operating positions of the transmission.

7. Withdrawal lockout according to one of claims 1 to 5 or 6, characterized in that the locking device (3) locks at least when the ignition key is moved out of the "drive" position into the "key withdrawable" position and at the same time the transmission is not locking the driving wheels.

## Revendications

1. Système de blocage empêchant le retrait de la clé de contact sur contacteurs d'allumage de véhicules automobiles à boîte de vitesses automatique ou manuelle en fonction de ce que la boîte de vitesses est dans une position "garage" ou "blocage" bloquant les roues motrices du véhicule, dans lequel un dispositif de blocage électromagnétique ou électromécanique relié à un contact de commutation prévu sur la boîte de vitesses coopère avec un plot de blocage (6) et bloque la rotation du contacteur d'allumage (2) vers la position de retrait de la clé de contact en fonction de la position de la boîte de vitesses, caractérisé par le fait que le plot de blocage (6) est fermé sur le rotor (9) du contacteur d'allumage (2) et que le dispositif de blocage (3) prévu sur le contacteur d'allumage (2) est constitué d'un électro-aimant (7) ayant une armature (8) chargée par ressort ou un noyau plongeur qui, dans la position "clé de contact bloquée", s'engage de l'extérieur, par un appendice de blocage (5) prévu à son extrémité libre, dans la trajectoire du rotor (9) pourvu du plot de blocage (6).

2. Système de blocage selon la revendication 1, caractérisé par le fait que le contacteur d'allumage (2) recevant le dispositif de blocage (3) est monté de façon que le dispositif de blocage puisse être facilement monté ultérieurement, le contacteur d'allumage (2) étant capable de fonctionner en tant que tel avec ou sans système de blocage.

3. Système de blocage selon l'une des revendications 1 et 2, caractérisé par le fait que le dispositif de blocage (3) est un relais à armature battante ou à noyau plongeur.

4. Système de blocage selon l'une des revendications 1 à 3, caractérisé par le fait que l'appendice de blocage (5) est, dans la direction de manoeuvre ARRET du contacteur d'allumage (2), supporté par une butée latérale (10).

5. Système de blocage selon l'une des revendications 1 à 4, caractérisé par le fait que le dispositif de blocage (3) est monté de façon telle que le circuit d'excitation de l'électro-aimant (7) soit coupé dans la position "garage" ou "blocage" bloquant les roues motrices du véhicule et fermé dans les positions de marche de la boîte de vitesses.

6. Système de blocage selon l'une des revendications 1 à 4, caractérisé par le fait que le dispositif de blocage (3) est monté de façon telle que le circuit d'excitation de l'électro-aimant (7) soit fermé dans la position "garage" ou "blocage" bloquant les roues motrices du véhicule et coupé dans les positions de marche de la boîte de vitesses.

7. Système de blocage selon l'une des revendications 1 à 5 ou 6, caractérisé par le fait que le dispositif de blocage (3) bloque au moins lorsqu'on déplace la clé de contact de la position "marche" à la position "clé retirable" et qu'en même temps la boîte de vitesses ne bloque pas les roues motrices.
